Europäisches Patentamt

European Patent Office

Office européen des brevets

(11) Publication number : **0 568 259 A1**

# (12) EUROPEAN PATENT APPLICATION

(21) Application number : **93303091.8**

(51) Int. Cl.⁵ : **C01G 5/00**

(22) Date of filing : **21.04.93**

(30) Priority : **30.04.92 CA 2067676**

(43) Date of publication of application :
**03.11.93 Bulletin 93/44**

(84) Designated Contracting States :
**BE DE FR GB SE**

(71) Applicant : **NORANDA INC.**
**BCE Place, 181 Bay Street, Suite 4100**
**Toronto Ontario, M5J 2T3 (CA)**

(72) Inventor : **Rosato, Lucy**
**2195 Cambridge**
**Town of Mount Royal, Quebec H3R 2Y4 (CA)**
Inventor : **Monette, Serge**
**545 Louise**
**Longueuil, Quebec J4J 2T7 (CA)**
Inventor : **Blais, Mireille**
**17582 Myrand**
**Pierrefonds, Quebec H9J 1G6 (CA)**

(74) Representative : **Thomas, Roger Tamlyn**
**D. Young & Co. 21 New Fetter Lane**
**London EC4A 1DA (GB)**

(54) **Process for making a silver nitrate solution.**

(57) A method for the production of silver nitrate solution without substantial generation of oxides of nitrogen comprises reacting metallic silver with nitric acid and hydrogen peroxide at between 20 and 30% excess hydrogen peroxide over the stoichiometric requirement.

EP 0 568 259 A1

Jouve, 18, rue Saint-Denis, 75001 PARIS

This invention relates to a method of making a silver nitrate solution without generation of oxides of nitrogen, and more particularly to the making of a silver nitrate make-up solution for use as an electrolyte in the electrorefining of Doré metal.

## BACKGROUND OF THE INVENTION

During the electrorefining of Doré metal in silver nitrate electrolyte for the production of refined silver, a portion of the electrolyte must be bled to control the level of dissolved impurities such as copper and palladium which will contaminate the silver product. The electrolyte is replenished by reacting metallic silver with nitric acid solution according to the following overall reactions:

$$3Ag + 4HNO_3 = 3AgNO_3 + NO + 2H_2O \qquad (1)$$
$$Ag + 2HNO_3 = AgNO_3 + NO_2 + H_2O \qquad (2)$$

It can be seen from the above reactions that as much as 33% of the nitric acid is converted to the colorless nitrogen oxide (NO) and the brown nitrogen dioxide ($NO_2$) fumes which must be oxidized and scrubbed in an elaborate adsorption system forming a dilute nitric acid solution which is eventually disposed of. The kinetics of $NO_x$ oxidation and adsorption are relatively slow and large scrubbers are required to provide the minimum residence times for complete removal. The inefficiency of the process is such that 100% $No_x$ removal is not obtained.

## SUMMARY OF THE INVENTION

In the present invention, it has been found that a silver nitrate solution can be produced by reacting silver with nitric acid and hydrogen peroxide without generation of oxides of nitrogen according to the overall general reaction: $2Ag + 2HNO_3 + H_2O_2 = 2AgNO_3 + 2H_2O$

Preferred features of the invention will now be described.

The silver nitrate solution is suitable for direct use as an electrolyte make-up.

The reaction is carried out in a reactor at a temperature below the boiling point of the solution, preferably between 55 and 95°C. Since the reaction is exothermic, cooling of the solution is required at nitric acid concentrations above 150 g/L.

The nitric acid concentration may be between 1 and 400 gpL depending on the desired concentration of the silver nitrate solution. The nitric acid concentration is preferably between 100 and 150 gpL to eliminate the need of internal cooling in the reactor.

Surprisingly it has also been found that in addition to the improved nitric acid efficiency and elimination of $NO_x$ fumes, the process provides an additional purification step due to the precipitation of contained impurities, such as copper and palladium, if present.

## DESCRIPTION OF A PREFERRED EMBODIMENT

In the preferred method of operation, the silver in the form of granules or sand, is fed to a column reactor and nitric acid solution is pumped upflow together with hydrogen peroxide through the bed of silver particulates to generate a silver nitrate solution of desired Ag concentration. The desired Ag concentration of the solution is controlled by the concentration of nitric acid in the feed. Best results in terms of $NO_x$ removal were achieved when operating between 20 and 30% excess hydrogen peroxide over the stoichiometric requirement. By proper control of the residence time of the nitric acid and hydrogen peroxide in the column, it is possible to obtain a silver nitrate solution with no free acid without any traces of $NO_x$ being produced in the process. A flow velocity of nitric acid and hydrogen peroxide between 1 and 6 cm/min has given excellent results.

In the following Examples 1 to 4, the silver sand dissolution was conducted in a PVC column of 15.2 cm diameter x 91.4 cm height, having a solution overflow located at 68.6 cm. Internal cooling was required only with solutions having an acid concentration above 150 g/L and was provided with stainless steel coils. Washed silver sand was added continuously to maintain a fix bed of 68 cm. The nitric acid and hydrogen peroxide were pumped upflow through the bed of silver sand. Unless specified otherwise, $NO_x$ was never detected during the tests. Solution samples collected at 15 cm above the acid and peroxide inlet were analysed for free acid. At the end of each test, the column was drained down to 5 cm and the silver nitrate solution analysed for silver and free nitric acid.

## EXAMPLE 1

28.5 L of a 101 gpL $HNO_3$ solution and 1.7 L of 50% $H_2O_2$ were pumped at 25°C over a period of 57 min. to give a total flowrate of 31.8 L/h ($2.9 \frac{cm}{min}$). The temperature of the solution in the column did not exceed 59°C during the test. At the end of the test, 28.3 L of silver nitrate solution assaying 155 gpL Ag and 0 g/L $HNO_3$ was collected. The acid was virtually all depleted at a height of 15 cm above the solution inlet.

## EXAMPLE 2

31.5 L of a 202 g/L $HNO_3$ solution and 3.8 L of 50% $H_2O_2$ were pumped at 25°C over a period of 60 min. to give a total flowrate of 35.3 L/h ($3.24 \frac{cm}{min}$). The temperature was maintained below 85°C throughout the test with internal cooling. At the end of the test, 33.3 L of silver nitrate solution assaying 260 g/L Ag and 0 g/L $HNO_3$ was recovered. Free acid could not be detected in all samples collected 15 cm above the solution inlet.

## EXAMPLE 3

The silver nitrate solution recovered in Example 2 was acidified with concentrated nitric acid and reused to generate a more concentrated silver nitrate solution. No additional silver sand was added to the reactor. 41.4 L of a solution assaying 200 g/L $HNO_3$ and 210 g/L Ag and 5.1 L of 50% $H_2O_2$ were pumped at 25°C through the bed of silver sand over a period of 80 min. to give a total flowrate of 34.9 L/h (3.2 $\frac{cm}{min}$). The temperature was also maintained below 84°C throughout the test with internal cooling. At the end of the test, 48 L of silver nitrate solution assaying 462 g/L Ag and 0 g/L $HNO_3$ was collected. There was no free acid in all samples collected at 15 cm above the solution inlet.

## EXAMPLE 4

45.5 L of a solution of 325 g/L $HNO_3$ at 20°C and 8.84 L of 50% $H_2O_2$ at 15°C were pumped over 170 min. to give a total flowrate of 19.2 L/h (1.8 $\frac{cm}{min}$). The temperature was maintained below 90°C throughout the test with internal cooling. At the end of the test, 58.9 L of silver nitrate solution asaying 395 g/L Ag and 0 g/L $HNO_3$ was recovered. Traces of $NO_x$ (less than 5 ppm) was detected in the column directly above the solution during the first 30 min. of the reaction.

In Examples 5 to 8, a stainless steel reactor of 15 cm diameter x 183 cm height, with a solution overflow located at 152 cm and no internal cooling coils was used for the dissolution. The reactor was filled to 152 cm with washed silver sand every second test. The temperature never exceeded 90°C in the reactor. $NO_x$ measurements were carried out inside the reactor at 22.5 cm above the solution overflow with a gas analyser. These Examples show that i) the reaction can proceed with various concentrations of hydrogen peroxide and, (ii) a maximum of 2 ppm $NO_x$ is generated at any stage of the process.

## EXAMPLE 5

72.6 L of a solution of 150 g/L $HNO_3$ at 20°C and 11 L of 30% $H_2O_2$ at 10°C was pumped over 139 min. to give a total flowrate of 36.1 L/h (3.4 $\frac{cm}{min}$). The temperature did not exceed 82°C throughout the test. $NO_x$ measurements indicated a maximum of 0.8 ppm throughout the test. 81.5 L of silver nitrate solution assaying 240 g/L Ag and 0 g/L $HNO_3$ was collected at the end of the test.

## EXAMPLE 6

The silver nitrate solution from Example 5 was acidified with nitric acid and fed again through the residual silver sand to increase the silver concentration. 95 L of a solution assaying 148 g/L $HNO_3$ and 205 g/L Ag at 19°C and 16.1 L of 30% $H_2O_2$ at 10°C was pumped over 193 min. to give a total flowrate of 34.5 L/h (3.25 $\frac{cm}{min}$). $NO_x$ measurements indicated a maximum of 2 ppm throughout the test. The acid was depleted at 20.3 cm from the solution inlet at the bottom of the reactor. Temperature never exceeded 83°C. 114 L of silver nitrate assaying 377 g/L Ag and no residual acid was recovered at the end of the test.

## EXAMPLE 7

67 L of a solution assaying 154 g/L $HNO_3$ at 12°C and 7 L of 45% $H_2O_2$ at 12°C were pumped over a period of 120 min. to give a total flowrate of 37 L/h (3.5 $\frac{cm}{min}$). $NO_x$ measurements indicated a maximum of 0.7 ppm throughout the test. Temperature never exceeded 75°C. 74.7 L of a neutral silver nitrate assaying 245 g/L Ag was collected at the end of the test.

## EXAMPLE 8

As previously demonstrated, the silver nitrate solution from Example 7 was acidified with nitric acid and fed again through the residual silver sand to increase the concentration of the silver nitrate solution. 89.1 L of a solution assaying 154 g/L $HNO_3$ and 205 g/L Ag at 25°C and 9.4 L of 45% $H_2O_2$ at 20°C were pumped over a period of 180 min. to give a total flowrate of 32.8 L/h (3.1 $\frac{cm}{min}$). $NO_x$ measurements indicated a maximum of 1.2 ppm throughout the test. Temperature never exceeded 78°C. 100 L of a neutral silver nitrate assaying 402 g/L Ag was collected at the end of the test.

Although the above process is preferably carried out in a column, it is to be understood that it could be carried out in any reaction vessel providing adequate residence time of the nitric acid and hydrogen peroxide in the reactor.

## Claims

1. A method for the production of silver nitrate solution without substantial generation of oxides of nitrogen comprising reacting metallic silver with nitric acid and hydrogen peroxide at from 20 to 30% excess hydrogen peroxide over the stoichiometric requirement.

2. A method as defined in claim 1, in which the reaction is carried out in a reactor at a temperature below the boiling point of the solution.

3. A method as defined in claim 2, in which the temperature is controlled so that it is in the range 55 - 95°C.

4. A method as defined in claim 1, 2 or 3, in which the initial nitric acid concentration is from 1 to 400 gpL, depending on the desired concentration of the silver nitrate solution.

5. A method as defined in claim 4, in which the initial nitric acid concentration is from 100 to 400 gpL.

6. A method as defined in any preceding claim, wherein the silver is fed to a column reactor in which nitric acid and hydrogen peroxide are flowed through the column at a rate of 1-6 cm/min.

7. A method as defined in any preceding claim wherein the silver is granular or nodular.

EP 0 568 259 A1

**European Patent Office**

# EUROPEAN SEARCH REPORT

Application Number

EP 93 30 3091

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-2 626 316 (FUJI PHOTO FILM)<br>* the whole document *<br>--- | 1-5,7 | C01G5/00 |
| X | DATABASE WPI<br>Derwent Publications Ltd., London, GB;<br>AN 88-288487<br>& JP-A-63 209 736 (KYOWA KAKO KK)<br>* abstract *<br>----- | 1 | |
| | | | **TECHNICAL FIELDS SEARCHED (Int. Cl.5)** |
| | | | C01G |

The present search report has been drawn up for all claims

| Place of search | Date of completion of the search | Examiner |
|---|---|---|
| THE HAGUE | 03 AUGUST 1993 | libberecht-verbeeck |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document